# FASCICULE DE BREVET EUROPEEN

(11) **EP 0 292 417 B1**
(45) Date de publication et mention de la délivrance du brevet: **31.03.1993**
(21) Numéro de dépôt: 88460008.1
(22) Date de dépôt: 06.05.1988
(51) Int. Cl.: A47J 27/20, A22C 7/00

(54) **Ensembles empilables de récipients destinés à contenir des produits alimentaires pendant leur cuisson**
Stapelbare Haltevorrichtungen für Behälter zum Kochen von Nahrungsmitteln
Stockable sets of vessels for cooking food

(30) Priorité: 19.05.1987 FR 8707108
(43) Date de publication de la demande: 23.11.1988
(73) Titulaire: ARMOR-INOX SA, F-56430 Mauron (FR)
(72) Inventeur: Dreano, Claude, F-56490 Guilliers (FR)
(74) Mandataire: Le Guen, Louis François

(56) Documents cités:
- FR-A- 2 485 884
- FR-A- 2 599 341
- FR-A- 2 601 653
- US-A- 2 310 957
- US-A- 2 503 208
- US-A- 2 776 071

## Description

La présente invention concerne des ensembles empilables de récipients destinés à contenir des produits alimentaires pendant leur cuisson, chaque ensemble comportant des goulottes longitudinales disposées côte à côte, deux plaques transversales, respectivement reliées aux bords frontaux des goulottes, et deux supports latéraux, respectivement formés d'une barre longitudinale et de deux pieds dont les extrémités supérieures sont respectivement fixées aux bouts de la barre, une partie verticale de chaque pied étant fixée à la surface externe de la goulotte externe correspondante.

A titre d'exemple, les produits alimentaires à cuire dans de tels ensembles sont des jambons, les récipients pouvant alors jouer également le rôle de moules.

La cuisson industrielle de jambons se fait généralement dans des cellules de volume relativement important contenant un fluide caloporteur en circulation ou non. Les jambons sont mis dans des récipients portés par des supports étagés, généralement empilés sur un chariot.

Dans un procédé de chargement et déchargement des jambons récent, chaque étage formé d'un support et de ses récipients est présenté individuellement aux postes de chargement ou de déchargement. Les étages sont empilés, dégerbés et déplacés par des moyens adéquats de manutention.

Des ensembles empilables de récipients adaptés à ce procédé ont déjà été décrits dans les documents FR-A-2 599 341 et FR-A-2 601 653. Les ensembles empilables comportent des goulottes longitudinales disposées côte à côte et solidarisées par un bâti pourvu de pieds inclinés transversalement par rapport aux goulottes. Le bâti comporte des moyens, dont les pieds inclinés, pour coopérer avec d'autres moyens du bâti d'un autre étage afin d'assurer un guidage et un calage efficaces quand on empile deux étages l'un sur l'autre.

Les dimensions des supports sont limitées par celles des cellules de cuisson. Notamment leur largeur doit être inférieure à celle des portes. D'autre part, pour des raisons de rendement, il est intéressant d'avoir le nombre maximal de goulottes par support. En pratique, il s'avère qu'on peut disposer, par exemple, quatre goulottes côte à côte par support. Mais il faut également tenir compte d'un autre problème qui consiste à assurer une distribution uniforme de la chaleur pendant la cuisson. En effet, si la circulation de fluide caloporteur est meilleure à la périphérie d'un bloc d'étages qu'à l'intérieur, les jambons contenus dans les goulottes externes cuisent plus vite que ceux des goulottes médianes et il en résulte une non-uniformité gênante des produits obtenus. Pour pallier cet inconvénient, il faut donc prévoir des cheminées de circulation du fluide caloporteur à l'intérieur du bloc d'étages le plus large possible, ces cheminées étant constituées par les écartements entre goulottes voisines dans un même étage.

Or, dans les ensembles empilables mentionnés ci-dessus, une partie non négligeable de la largeur est occupée, de chaque côté, par un pied incliné, dont l'inclinaison est nécessaire au guidage et au calage lors de l'empilage.

Un objet de la présente invention consiste à prévoir un ensemble empilable dans lequel au moins une partie de la largeur couverte par l'inclinaison des pieds est récupérée pour agrandir l'écartement entre goulottes et ainsi remédier aux inconvénients mentionnés ci-dessus.

Selon une caractéristique de l'invention, il est prévu un ensemble empilable de récipients, tels que défini dans le préambule, chaque pied dépassant les sommets des goulottes et descendant au-dessous de leurs fonds, chaque pied étant constitué de trois tronçons consécutifs situés dans un même plan oblique et perpendiculaire au plan longitudinal de l'ensemble, le tronçon intermédiaire étant soudé à la surface externe de la goulotte externe correspondante avec son extrémité supérieure au niveau des sommets des goulottes et son extrémité supérieure au niveau des sommets des goulottes et son extrémité inférieure au-dessous de leur fonds, les plans obliques des deux pieds d'un support latéral s'écartant vers le bas, les faces en regard des tronçons intermédiaires du pied avant et du pied arrière d'un support latéral portant des butées, chaque couple de butée s'appuyant sur la barre correspondante du support de l'ensemble inférieur lors d'un empilage, le niveau des butées étant tel qu'il existe un espace entre les fonds des goulottes de l'étage supérieur et les sommets des goulottes de l'ensemble immédiatement inférieur.

Selon une autre caractéristique, les tronçons supérieur et inférieur de chaque pied s'écartent vers l'extérieur par rapport au tronçon intermédiaire.

Selon une autre caractéristique de l'invention, les parois des goulottes externes ont une épaisseur supérieure à celle des parois des goulottes médianes.

Cette différence d'épaisseur ne permet pas seulement de satisfaire aux exigences de robustesse du dispositif. Elle procure également une plus grande inertie calorifique aux goulottes externes et c'est donc un moyen qui permet d'améliorer encore l'uniformisation de la distribution de chaleur dans un bloc d'étages.

Selon une autre caractéristique de l'invention, entre les bases desdites plaques d'extrémité et les fonds des goulottes, sont prévues des fentes pour permettre l'écoulement des jus de cuisson.

Selon une autre caractéristique de l'invention, les goulottes sont compartimentées au moyen de cloisons transversales dont les bases ne descendent pas jusqu'au fond pour permettre l'écoulement des jus de cuisson.

Par ailleurs, dans le document FR-A-2 485 884, il est décrit un assemblage de pressage de moules à jambons empilés dans lequel le fond de chaque moule sert de couvercle pour le moule situé juste au-dessous. Des moyens de guidage sont prévus pour guider les moules pendant l'opération de pressage. Un avantage de cet assemblage tenait au fait que l'on pouvait manipuler plusieurs moules à la fois.

Un objet de la présente invention consiste à profiter du fait que, dans un empilage d'ensembles suivant l'invention le fond d'une goulotte se trouve directement au-dessus du dessus d'une goulotte de l'étage inférieur.

Selon une autre caractéristique, chaque fond de goulotte porte une ou une pluralité de plaques de largeur légèrement inférieure à la largeur interne d'une goulotte, la longueur de la plaque ou la somme des plaques d'une pluralité étant légèrement inférieure à la longueur d'une goulotte.

Selon une autre caractéristique, la ou lesdites plaque(s) d'une pluralité sont reliée(s) au fond de la goulotte correspondante par deux parois verticales.

Selon une autre caractéristiques, les deux parois latérales de chaque plaque sont orientées transversalement.

Selon une autre caractéristique, les parois latérales d'une plaque sont orientées longitudinalement.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels:
la Fig. 1 est une vue en plan d'un ensemble empilable selon l'invention,
la Fig. 2 est une vue en élévation d'un empilage des ensembles selon l'invention,
la Fig. 3 est une vue de profil, à plus grande échelle, de l'empilage de la Fig. 2,
la Fig. 4 est une vue partielle en élévation d'un empilage de deux variantes d'ensembles selon l'invention, et
la Fig. 5 est une vue partielle de profil de l'empilage de la Fig. 4.

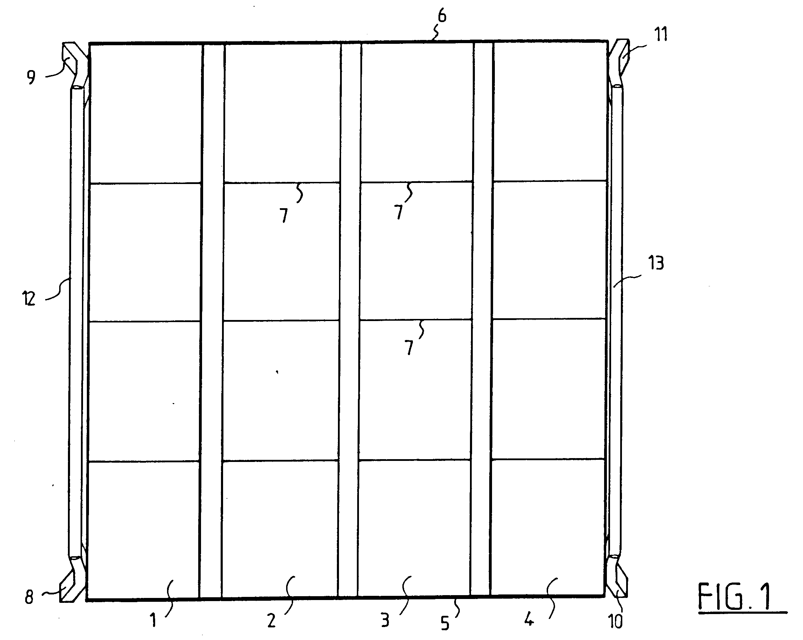

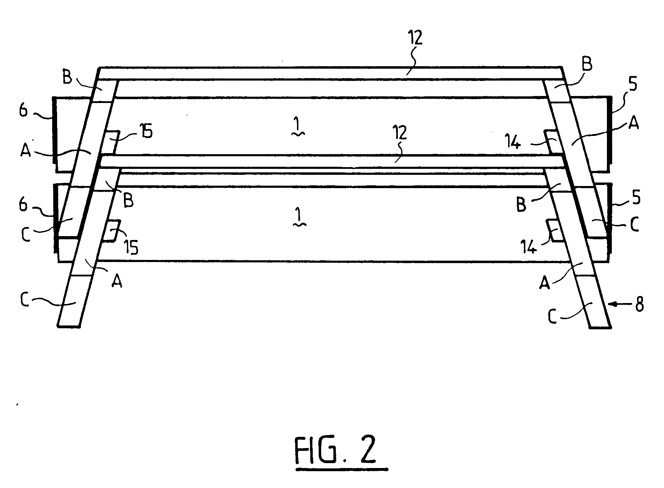

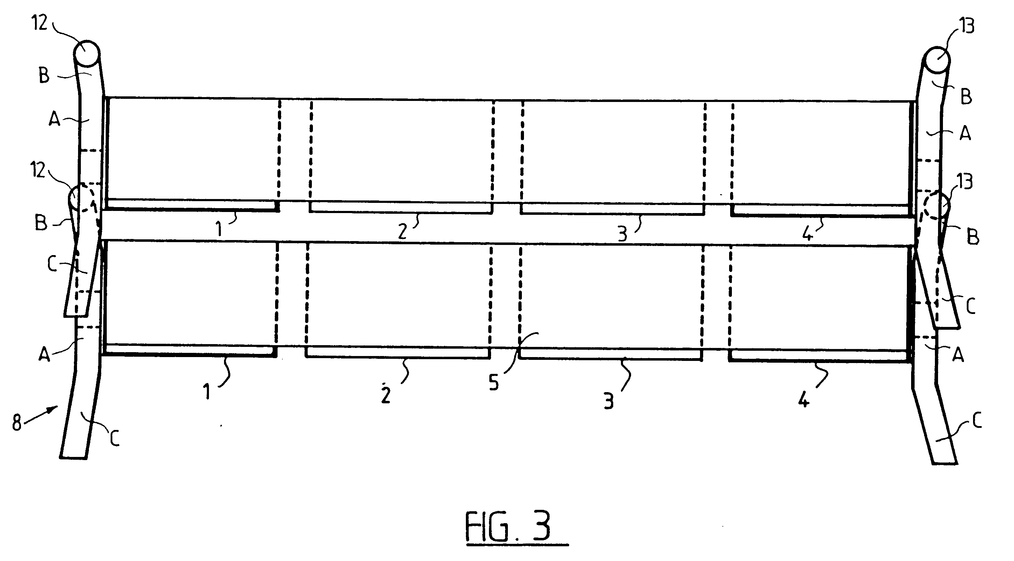

L'ensemble empilable, montré à la Fig. 1, comporte quatre récipients sous forme de goulottes longitudinales à profil en U, 1 à 4, disposées côte à côte. Les goulottes 1 à 4 sont solidarisées par une plaque avant 5 et une plaque arrière 6. Ces plaques, Figs. 2 et 3, ont leur sommet sensiblement au même niveau que celui des parois latérales des goulottes 1 à 4, mais leur base est légèrement au-dessus des fonds des goulottes, pour permettre l'ecoulement des jus de cuisson. Les goulottes 1 à 4 sont, de préférence, compartimentées par des cloisons transversales 7 ne descendant pas, non plus, jusqu'au fond. Pour des raisons déjà mentionnées, c'est-à-dire la rigidité du dispositif et la répartition optimale de la chaleur, les parois des goulottes externes 1 et 4 sont plus épaisses que celles des goulottes médianes 1 et 2.

A la paroi latérale externe de la goulotte externe 1, sont soudés, près de ses extrémités, les tronçons intermédiaires de deux pieds identiques 8 et 9. De même, à la paroi latérale externe de la goulotte externe 4, sont soudés deux pieds 10 et 11, identiques aux pieds 8 et 9. Vers le haut, les pieds 8 à 11 dépassent de quelques centimètres le sommet des goulottes 1 à 4. Vers le bas, ils dépassent plus nettement la base des goulottes. Dans un exemple de réalisation préféré, les goulottes ont une hauteur de 13 cm et les pieds dépasent, vers le haut, de 6 cm environ et, vers le bas, de 12 cm environ.

Dans la vue en élévation de la Fig. 2, les pieds 8 à 11 apparaissent tous inclinés longitudinalement, de manière à ce que chaque paire 8, 9 ou 10, 11, de chaque côté, s'évase vers le bas pour rendre l'empilage possible. De préférence, les bases des pieds avant 8 et 10 ne dépassent pas l'avant des goulottes 1 à 4, ni les pieds 9 et 11 l'arrière de celle-ci. En pratique, dans l'exemple de réalisation préféré, les pieds 8 à 11 sont inclinés à environ 15° par rapport à la verticale.

Dans la vue de profil de la Fig. 3, chaque pied, tel que 8, apparaît formé d'un tronçon rectiligne vertical A, dont le sommet coïncide pratiquement avec celui des goulottes 1 à 4 et dont la base est légèrement au dessous du fond des goulottes, un tronçon supérieur B, légèrement incliné vers l'extérieur par rapport à la verticale, et un tronçon inférieur C, également incliné vers l'extérieur par rapport à la verticale, mais de façon plus sensible. Dans l'exemple de réalisation préférée, la partie 8b apparaît inclinée à environ 5° par rapport à la verticale et la partie 8c à 15° environ.

Dans chaque paire de pieds 8, 9 ou 10, 11, les extrémités supérieures des tronçons supérieurs B sont soudées aux extrémités d'une barre longitudinale horizontale 12 ou 13. De préférence, les barres 12, 13 ont une section ronde de diamètre sensiblement égal à l'épaisseur transversale des pieds. Les barres 12 et 13 constituent avec chaque paire de pieds un support latéral; elles donnent de la rigidité à l'ensemble empilable et, de plus, servent de poignées de manipulation.

Les faces en regard l'une de l'autres des tronçons intermédiaires A des pieds de chaque paire 8, 9 ou 10, 11 portent des butées 14, 15, Fig. 2, qui sont situées à la même hauteur. Les butées agissent par leurs faces inférieures et, au niveau de celles-ci, la distance entre lesdites faces des pieds de chaque paire est très légèrement supérieure à la longueur des barres 12, 13. Ainsi, quand on empile deux ensembles l'un sur l'autre, les tronçons inférieurs C des pieds de chaque paire 8, 9 et 10, 11 et les butées 14, 15 viennent coiffer et s'appuyer respectivement sur chaque barre 12 et 13 et les tronçons supérieurs B adjacents des pieds de l'ensemble inférieur, l'évasement des pieds dans chaque paire formant un guide longitudinal.

Dans le sens transversal, le tronçon inférieur C de chaque paire de pieds 8, 10 et 9, 11 est également évasé, Fig. 3. A l'empilage, le tronçon C de chaque paire 8,10 et 9, 11 de l'ensemble supérieur vient coiffer, respectivement à l'avant et à l'arrière, les arêtes supérieures externes des goulottes externes 1 et 4. L'évasement du tronçon C de chaque paire, coopérant avec lesdites arêtes forme un guide de positionnement transversal.

Enfin, comme les pieds sont aussi inclinés transversalement vers l'extérieur, à l'empilage, les arêtes externes inférieures des goulottes externes 1 et 4 de l'ensemble supérieur se placent sans coincement possible entre les barres 12 et 13 et les tronçons C des pieds 8 à 11 de l'ensemble inférieur, à mesure que le guidage se fait par les pieds de l'ensemble supérieur et les arêtes inférieures des goulottes externes inférieures.

Comme le montrent les Figs. 2 et 3, la position plus ou moins haute, des butées 14 et 15 sur les tronçons A des pieds déterminent l'écartement vertical, plus ou moins petits entre les goulottes des ensembles empilés. Dans un exemple de réalisation satisfaisant de l'invention, l'écartement entre le sommet des goulottes d'un ensemble et le fond des goulottes de l'ensemble supérieur est d'environ 3 cm.

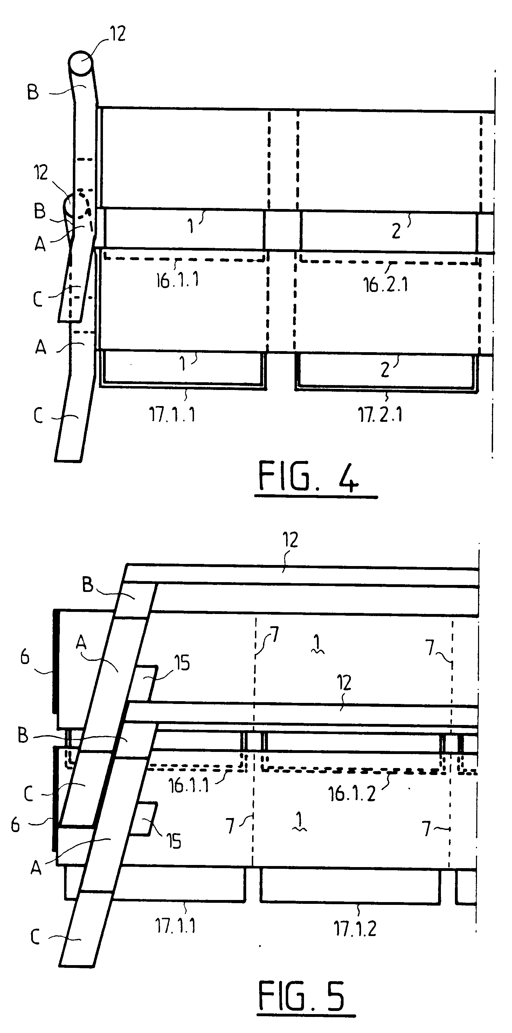

Dans la variante montrée aux Figs. 4 et 5, sous les fonds des goulottes 1 à 4, seules les goulottes 1 et 2 étant montrées, sont prévues des plaques séparées, telles que 16.1.1, 16.1.2, ..., 16.2.1, ..., 17.1.1, 17.1.2, ..., 17.2.1, ..., qui sont destinées à servir de couvercle pour les compartiments des goulottes immédiatement inférieures dans une empilage.

Plus précisément, dans les Figs. 4 et 5, on a représenté un empilage de deux ensembles suivants l'invention. L'ensemble du dessus est muni de plaques 16.i.j, dans lequel i indique le rang de 1 à 4 de la goulotte sous laquelle la plaque est suspendue, et j indique le rang de la plaque sous la goulotte. Si l'on considère que, dans chaque goulotte, les cloisons 7 définissent quatre compartiments, comme le montre la Fig. 1, j varie de 1 à 4. Les intervalles entre les plaques coïncident avec les positions verticales des cloisons 7. Bien entendu, les dimensions hors tout des plaques sont légèrement inférieures à celles d'un compartiment pour pouvoir y pénétrer.

En pratique, chaque plaque, servant de couvercle pour l'ensemble inférieur, est constituée par la base d'une tôle en acier inoxydable pliée en U, les parties verticales du U étant soudées sous le fond de la goulotte. Les Figs. 4 et 5 montrent que, sous les goulottes de l'ensemble supérieur, les parties verticales des tôles en U des plaques 16.i.j sont dans des plans transversaux alors celles des U des plaques 17.i.j de l'ensemble inférieur sont dans des plans longitudinaux. Ainsi, les plaques 16.i.j et leurs retours vers le haut définissent des couloirs de circulation longitudinaux pour les fluides de chauffage ou de refroidissement, alors que les plaques 17.i.j définissent des couloirs de circulation transversaux. Il en résulte une meilleure homogénéité des échanges thermiques.

La distance entre les plaques 16.i.j ou 17.i.j des fonds des goulottes correspondantes est telle que celles-ci entrent suffisamment dans les compartiments des goulottes inférieures pour éventuellement presser les produits qui y sont mis à cuire. Dans les Figs. 4 et 5, on a supposé que le pressage était terminé. En pratique, en début de la cuisson, les plaques peuvent être moins entrées dans les goulottes, les butées 14 et 15 ne reposant alors pas sur les barres 12. L'empilage est, à ce moment là, maintenu par des moyens de traction entre, par exemple, les barres de l'étage inférieur et celles de l'étage supérieur de la pile d'ensembles. Au fur et à mesure que les produits cuisent, les plaques descendent dans les goulottes correspondantes.

Dans les dispositifs antérieurs, l'écartement entre goulottes voisines était d'environ 0,8 cm. Dans l'exemple de réalisation préféré de l'invention, cet écartement est de 3 cm environ, soit presque quatre fois plus grand.

## Revendications

1. Ensemble empilable de récipients destiné à contenir des produits alimentaires pendant leur cuisson, chaque ensemble comportant des goulottes longitudinales (1 à 4) disposées côte à côte, deux plaques transversales (5, 6), respectivement reliées aux bords frontaux des goulottes, et deux supports latéraux, respectivement formés d'une barre longitudinale (12, 13) et de deux pieds (8, 9) dont les extrémités supérieures sont respectivement fixées aux bouts de la barre, une partie verticale de chaque pied étant fixée à la surface externe de la goulotte externe (1 ou 4) correspondante, caractérisé en ce que chaque pied dépasse les sommets des goulottes et descend au-dessous de leurs fonds, chaque pied (8 ou 9) étant constitué de trois tronçons consécutifs (B, A, C) situés dans un même plan oblique et perpendiculaire au plan longitudinal de l'ensemble, le tronçon intermédiaire (A) étant soudé à la surface externe de la goulotte externe correspondante avec son extrémité supérieure au niveau des sommets des goulottes et son extrémité inférieure au-dessous de leurs fonds, les plans obliques des deux pieds (8 ou 9) d'un support latéral s'écartant vers le bas, les faces en regard des tronçons intermédiaires (A) du pied avant (8) et du pied arrière (9) d'un support latéral portant des butées (14, 15), chaque couple de butée s'appuyant sur la barre correspondante du support de l'ensemble inférieur lors d'un empilage, le niveau des butées étant tel qu'il existe un espace entre les fonds des goulottes de l'étage supérieur et les sommets des goulottes de l'ensemble immédiatement inférieur, dans un empilage.

2. Ensemble suivant la revendication 1, caractérisé en ce que les tronçons supérieur (B) et inférieur (C) de chaque pied s'écartent vers l'extérieur par rapport au tronçon intermédiaire (A).

3. Ensemble suivant la revendicaton 1 ou 2, caractérisé en ce que les parois des goulottes externes (1 et 4) ont une épaisseur supérieure à celle des parois des goulottes médianes.

4. Ensemble suivant l'une des revendication 1 à 3, caractérisé en ce que, entre les bases desdites plaques d'extrémité (5, 6) et les fonds des goulottes, sont prévues des fentes pour permettre éventuellement l'écoulement des jus de cuisson.

5. Ensemble suivant l'une des revendications 1 à 4, caractérisé en ce que les goulottes (1 à 4) sont compartimentées au moyen de cloisons transversales (7) dont les bases ne descendent pas jusqu'au fond pour permettre éventuellement l'écoulement des jus de cuisson.

6. Ensemble suivant l'une des revendication 1 à 5, caractérisé en ce que, chaque fond de goulotte porte une ou une pluralité de plaques (16.1.1, 16.1.2, 16.2.1, ..., 17.1.1, 17.1.2, 17.2.1.) de largeur légèrement inférieure à la largeur interne d'une goulotte, la longueur de la plaque ou la somme des plaques d'une pluralité étant légèrement inférieure à la longueur d'une goulotte.

7. Ensemble suivant la revendication 6, caractérisé en ce que la ou lesdites plaques(s) d'une pluralité sont reliée(s) au fond de la goulotte correspondante par deux parois verticales.

8. Ensemble suivant la revendication 7, caractérisé en ce que les deux parois latérales de chaque plaque sont orientées transversalement.

9. Enemble suivant la revendication 7, caractérisé en ce que les parois latérales d'une plaque sont orientées longitudinalement.

10. Pile d'ensembles suivant l'une des revendication 1 à 9.

## Claims

1. A stackable set of receptacles intended to contain foodstuffs during their cooking, each set comprising longitudinal channels (1 to 4) arranged side by side, two transversal plates (5, 6), joined respectively to the front edges of the channels, and two lateral supports, each composed of a longitudinal bar (12, 13) and two legs (8, 9) the upper ends of which are respectively fixed to the ends of the bar, a vertical portion of each leg being fixed to the outer face of the corresponding outer channel (1 or 4), characterized in that each leg protrudes upwards from the upper edges of the channels and downwards from their bottoms, each leg (8 or 9) being constituted by three consecutive sections (B, A, C) situated in one and the same plane, oblique and perpendicular to the longitudinal plane of the set, the intermediate section (A) being soldered to the outer face of the corresponding outer channel with its upper end at the level of the upper edges of the channels and its lower end below their bottoms, the oblique planes of the two legs (8 or 9) of a lateral support diverging downwards, the facing sides of the intermediate sections of the front leg (8) and the rear leg (9) in a lateral support being provided with stops (14, 15), each pair of stops resting on the lower set when stacked, the level of the stops being such that, in a stack, there exists a space between the bottoms of the channels of the upper tier and the top edges of the channels of the set immediately below it.

2. A set according to claim 1, characterized in that the upper (B) and lower (C) sections of each leg diverge outwards in relation to the intermediate section (A).

3. A set according to claim 1 or 2, characterized in that the walls of the outer channels (1 or 4) are thicker than the walls of the intermediate channels.

4. A set according to any of claims 1 to 3, characterized in that slits for allowing the discharge of cooking juices are provided, if required, between the lower parts of said end plates (5, 6).

5. A set according to any of claims 1 to 4, characterized in that the channels (1 to 4) are divided into compartments by means of transversal partitions (7), the lower parts of which do not descend all the way to the bottom for, if required, allowing the discharge of cooking juices.

6. A set according to any of claims 1 to 5, characterized in that each channel bottom is provided with one or a plurality of plates (16.1.1, 16.1.2, ..., 17.1.1, 17.1.2, 17.2.1.) of a width slightly smaller than the inner width of a channel, the length of the plate or the sum of plates in a Plurality being slightly shorter than the length of a channel.

7. A set according to claim 6, characterized in that the plate or the plates in a plurality is/are joined to the bottom of the corresponding channel by two vertical walls.

8. A set according to claim 7, characterized in that the two lateral walls of each plate are transversely oriented.

9. A set according to claim 7, characterized in that the lateral walls of a plate are longitudinally oriented.

10. A stack of sets according to any of claims 1 to 9.

## Patentansprüche

1. Stapelbarer Behältersatz zum Kochen von Nahrungsmitteln, wobei jeder Satz aus länglichen, Seite an Seite angeordneten Kanälen (1-4), zwei mit den Stirnwänden der Kanäle verbundenen Querplatten (5,6) und zwei Seitengestellen besteht, von denen jedes aus einer Längsstange (12,13) und zwei Beinen (8,9) zusammengesetzt ist, deren obere Enden starr mit den Stangenenden verbunden sind, wobei ein vertikaler Abschnitt jedes Beines an der Außenfläche des entsprechenden Kanals (1 oder 4) befestigt ist, dadurch gekennzeichnet, daß jedes Bein an den Oberkanten der Kanäle nach oben und an ihren Böden nach unten übersteht, wobei jedes Bein (8 oder 9) aus drei aufeinanderfolgenden Abschnitten (B,A,C) gebildet ist, die, schräg und senkrecht zur Längsebene des Satzes, in ein und derselben Ebene liegen, wobei der Mittelabschnitt (A) an die Außenfläche des entsprechenden Außenkanals angelötet ist, und sein oberes Ende auf Höhe der Oberkanten der Kanäle, und seine unteren Enden unterhalb der Kanalböden liegt, die schräglaufenden Ebenen der zwei Beine (8 oder 9) eines Seitengestells nach unten divergieren, die Stirnflächen der Mittelabschnitte des Vorderbeines (8) und des Hinterbeines (9) eines Seitengestells mit Anschlägen (14,15) versehen sind, wobei in einem Stapel jedes Anschlagpaar auf dem unteren Satz aufliegt, die Anschläge in einer solchen Höhe angebracht sind, daß in einem Stapel zwischen den Böden der Kanäle der oberen Reihe und den Oberkanten der Kanäle unmittelbar darunter ein Abstand besteht.

2. Satz nach Anspruch 1, dadurch gekennzeichnet, daß die oberen (B) und unteren Abschnitte (C) jedes Beines relativ zum Mittelabschnitt (A) nach außen divergieren.

3. Satz nach Anspruch 1 oder 2, dadurch gekennzeichnet, daß die Wände der äußeren Kanäle (1 oder 4) dicker als die Wände der mittleren Kanäle sind.

4. Satz nach einem der Ansprüche 1 bis 3, dadurch gekennzeichnet, daß, falls erforderlich, zwischen den Unterteilen der besagten Abschlußplatten (5,6) Schlitze für den Ablauf von Kochsaft vorgesehen sind.

5. Satz nach einem der Ansprüche 1 bis 4, dadurch gekennzeichnet, daß die Kanäle (1 bis 4) durch Querwände (7) in Abteile eingeteilt sind, die nicht bis zum Boden heruntergeführt sind, um, falls erforderlich, eine Möglichkeit für den Abfluß von Kochsaft zu haben.

6. Satz nach einem der Ansprüche 1 bis 5, dadurch gekennzeichnet, daß jeder Kanalboden mit einer Platte oder einer Vielzahl von Platten (16.1.1, 16.1.2, ..., 17.1.1, 17.1.2, 17.2.1.) versehen ist, deren Breite etwas geringer ist als die lichte Breite eines Kanals, und wobei die Länge der Platte oder, bei einer Plattenvielzahl, der Summe der Platten etwas kürzer als die Länge eines Kanals ist.

7. Satz nach Anspruch 6, dadurch gekennzeichnet, daß die Platte oder die Vielzahl von Platten durch zwei vertikale Wände mit dem Boden des entsprechenden Kanals verbunden ist/sind.

8. Satz nach Anspruch 7, dadurch gekennzeichnet, daß die Seitenwände jeder Platte quer ausgerichtet sind.

9. Satz nach Anspruch 7, dadurch gekennzeichnet, daß die Seitenwände einer Platte längs ausgerichtet sind.

10. Stapel von Sätzen nach einem der Ansprüche 1 bis 4.
